(19) **Europäisches Patentamt**

**European Patent Office**

**Office européen des brevets**

(11) **EP 0 727 143 B1**

(12) **EUROPEAN PATENT SPECIFICATION**

(45) Date of publication and mention
of the grant of the patent:
**04.10.2000 Bulletin 2000/40**

(51) Int Cl.[7]: **A21D 2/26**, A21D 10/00,
A21D 13/00, A21D 2/02

(21) Application number: **96200147.5**

(22) Date of filing: **22.01.1996**

(54) **Improver for baked goods, containing rye flour**

Roggemehl-enthaltender Backverbesserer

Agent améliorant pour la cuisson contenant de farine de seigle

(84) Designated Contracting States:
**AT BE CH DE DK ES FR GB GR IE IT LI NL PT SE**

(30) Priority: **20.02.1995 EP 95200400**

(43) Date of publication of application:
**21.08.1996 Bulletin 1996/34**

(73) Proprietors:
• **UNILEVER N.V.**
**3000 DK Rotterdam (NL)**
Designated Contracting States:
**BE CH DE DK ES FR GR IT LI NL PT SE AT**
• **UNILEVER PLC**
**London EC4P 4BQ (GB)**
Designated Contracting States:
**GB IE**

(72) Inventors:
• **Kniel, Bärbel**
**D-89231 Neu-Ulm (DE)**
• **Dürr, Dagmar**
**D-89075 Ulm (DE)**

(74) Representative: **Sikken, Antonius H. J. M. et al**
**UNILEVER N.V.,**
**Patent Division,**
**P.O. Box 137**
**3130 AC Vlaardingen (NL)**

(56) References cited:
**EP-A- 0 066 444**          **WO-A-95/04462**

**Description**

Some dough systems have an insufficient dough extensibility, especially when strong flours with high gluten content or high amounts of dough stabilizing agents such as ascorbic acid are used. This effect leads to a reduced oven spring and volume of rolls and breads.

In order to overcome this negative effect L-cysteine can be used as a beneficial additive for better dough extensibility and increased volume of the baked products. However, L-cysteine is a chemical that must be synthesized chemically or that must be isolated by crystallisation from materials containing hydrolysed keratin such as hairs, feathers etc.

Therefore cysteine is considered nowadays as an unwanted food ingredient by the consumer especially as a bread ingredient. We have performed a study in order to find a natural substitute for L-cysteine that when used in dough systems could replace the effects of the cysteine in doughs.

Above study resulted in the finding, that a rye flour fraction (as disclosed in our co-pending PCT-patent application 94/02508) could be used as a L-cysteine substitute in doughs, particulary in doughs for wheat rolls and wheat breads.

However, the rye flour fraction can also be applied in (sweet) confectionery mixes, especially mixes for the preparation of typical German confectionery baked goods such as: Blechkuchen, Stollen, Hefezöpfe, Bienenstich, Plunder, Blätterteig, etc.

The rye flour fraction can be added to the dough in itself or it can be used as functional ingredient in improvers for baked goods, bread mixes and confectionery mixes.

Therefore our invention concerns in the first instance improver compositions comprising:

| | |
|---|---|
| 5-50 wt%, | preferably 10-40 wt%, most preferably 15-35 wt% of a sugar, preferably selected from sucrose, glucose or mixtures thereof. |
| 1-20 wt%, | preferably 3-15 wt%, most preferably 5-13 % wt% of an emulsifier system, which can contain diacetyl tartaric esters from monoglycerides. |
| 1-12 wt%, | preferably 2.5-10 wt% , most preferably 7-9 wt% of dough stabilizers |
| 0.05-2.5 wt%, | preferably 0.1-1.5 wt%, most preferably 0.5-1 wt% of enzyme preparations |
| 0.1-1.0 wt%, | preferably 0.2-0.5 wt%, of chemical oxidative agent(s), in particular absorbic acid. |
| 0.1-10 wt%, | preferably 0.5-8 wt%, most preferably 0.5-5 wt% of a rye fraction, having: |

- a protein content of more than 12 wt%;
- an increased dietary fibre content of at least 10% compared with ordinary rye flour;
- a particle size distribution, such that at least 95 wt% has a particle size below 64 μm.

| | |
|---|---|
| 0-50 wt%, | preferably 2-40 wt%, most preferably 15-25 wt% enzyme active soya bean flour |
| 0-40 wt%, | preferably 15-35 wt%, most preferably 15-25 wt% of a cold-gelling thickening agent. |
| 0-50 wt%, | preferably 5-40 wt%, most preferably 10-25 wt% of a malt product. |
| 0-10 wt%, | preferably 0.5-8 wt%, most preferably 2-5 wt% of a fat, preferably a hardened vegetable fat. |
| 0-20 wt%, | preferably 2-18 wt%, most preferably 5-15 wt% of a flour, preferably a wheat flour. |

Suitable cold-gelling thickening agent can be selected from the group consisting of guar gum, carboxy methyl cellulose, locust bean gum, gelatin and galactomannane.

Any malt product can be applied. There are malt products which have high α-amylase activity while others have lower or no α-amylase activity.

The emulsifier system often contains diacetyl tartaric esters from monoglycerides (DATEM). In addition to these DATEMS other emulsifiers can be present as well. So additional emulsifiers can be selected from the group consisting of lecithin, monoglycerides (saturated, unsaturated or a mixture) and sodium or calcium stearoyl lactylate.

Dough stabilizers are applied in order to give the doughs enough stability against cooling and freezing. Examples of these components are freeze stabilizers selected from the group consisting of: acidic phosphates, acidic pyrophosphates and calcium phosphates.

In particular the acidic components have freeze stabilizing properties. The tricalcium phosphate is an anti caking agent and has the ability to increase the free flowing character of the improver composition.

Enzyme preparations are commonly used in improver compositions. Very suitable enzymes are selected from the group, consisting of xylanase, amylase, oxidase, peroxidase, lipase, cellulase, hemicellulase, lipoxygenase and galactomannane.

A number of the components mentioned above have advantageous properties for specific applications. E.g. improver compositions for bread or rolls preferably contain a substrate having lipoxigenase activity preferably being soya bean flour; preferably contain the cold-swelling thickening agent in particular guar gum; preferably contain a malt product, in particular having lower or no α-amylase activity; preferably contain some hardened vegetable fat.

The use of our novel improver compositions in dry mixes for the preparation of a dough for rolls and breads results in mixes, comprising flours and/or other cereal products and/or proteins like gluten and/or dried sour dough. The composition of the resulting dough calculated on flour base is:

| | |
|---|---|
| 1-10 wt%, | preferably 2-8 wt%, most preferably 3-6 wt% of the improver composition, according to claims 1-5. |
| 0.1-30 wt%, | of leavening component, selected from the group consisting of yeast, chemical leaveners, sour dough and pre-dough. |
| 20-70 wt%, | preferably 30-65 wt%, most preferably 40-60 wt% of water. |

Mixes for the preparation of confectionery products based on sweet doughs, resulting from the application of our novel improver compositions preferably comprise:

| | |
|---|---|
| 20-80 wt%, | preferably 40-70 wt%, in particular 50-65 wt% of a sugar. |
| 10-60 wt%, | preferably 10-40 wt%, in particular 10-20 wt% of a flour. |
| 5 - 80 wt%, | preferably 10-70 wt%, in particular 10-40 wt% of the improver composition, according to claims 1-5. |
| 0-10 wt%, | of proteins like gluten. |

Sweet confectionery doughs can be made from our compositions and mixes. These doughs in particular comprise:

| | |
|---|---|
| 15-70 wt%, | of flour, in particular wheat flour. |
| 5-60 wt%, | of the mix according to claim 7. |
| 0-10 wt%, | of whole egg or egg-yolk |
| 0.5-10 wt%, | of yeast, a chemical leavener or a wheat pre-dough. |
| 1 - 40 wt%, | of a bakery fat |
| balance water, | preferably being 20-35 wt%. |

Part of our invention are also baked goods made from premoulded parts of the doughs made from the mixes containing the improver compositions according to claim 1-5.

Another application of our invention is the use of the rye fraction having a protein content of more than 12 wt%, an increased fibre content of at least 10%, compared with ordinary rye flour and a particle size distribution such that at least 95 wt% has a particle size below 64 μm as a cysteine substitute for the improvement of the dough extensibility.

EXAMPLES

1. Improver composition for rolls and breads

A blend was made by mixing of the following components in the amounts indicated:

| Ingredient | Comparative | Acc. to invention |
|---|---|---|
| | (wt%) | (wt%) |
| sugar | 23.0 | 23.0 |
| soya bean flour | 15.8 | 15.3 |
| guar gum | 22.0 | 22.0 |
| malt product | 14.3 | 14.3 |
| DATEM | 8.0 | 8.0 |
| acidic calcium phosphate | 4.4 | 4.4 |
| lecithin | 3.0 | 3.0 |
| acidic sodium pyrophosphate | 2.5 | 2.5 |
| tricalcium phosphate | 2.0 | 2.0 |
| enzyme preparation | 0.8 | 0.8 |
| ascorbic acid | 0.3 | 0.3 |

(continued)

| Ingredient | Comparative | Acc. to invention |
|---|---|---|
| | (wt%) | (wt%) |
| L-cysteine HCL | 0.035 | - |
| rye fraction | - | 1.5 |
| hardened, vegetable fat | 3.9 | 3.0 |
| | $\overline{100\,\%}$ | $\overline{100\,\%}$ |

2. Above compositions were applied for the preparation of sugar-free doughs according to the following recipe:

| Component | Amount |
|---|---|
| wheat flour | 10.0 kg |
| improver mix | 0.35 kg |
| yeast | 0.35 kg |
| salt | 0.2 kg |
| water | 5.7 kg |

The doughs were prepared in the standard way. The extensibility of the two dough systems was comparable.

3. Improver composition for sweet dough

A blend was made by mixing of the following ingredients in the amount indicated:

| Ingredient | Comparative | Acc. to invention |
|---|---|---|
| | (wt%) | (wt%) |
| sugar | 54.0 | 54.0 |
| wheat flour | 27.0 | 27.0 |
| salt | 8.1 | 8.1 |
| monoglycerides | 3.6 | 3.3 |
| DATEM | 2.2 | 2.0 |
| lecithin | 1.4 | 1.3 |
| tricalcium phosphate | 0.5 | 0.5 |
| calcium acetate | 0.4 | 0.4 |
| acidic sodium pyrophosphate | 0.18 | 0.18 |
| acidic calcium phosphate | 0.14 | 0.14 |
| enzymes preparation | 0.07 | 0.07 |
| ascorbic acid | 0.05 | 0.05 |
| L-cysteine HCL | 0.005 | - |
| rye fraction | - | 2.0 |
| hardened vegetable fat | 1.5 | 1.4 |
| | $\overline{100\,\%}$ | $\overline{100\,\%}$ |

4. Above compositions were applied for the preparation of confectionery doughs with the composition given below:

| Component | Amount |
|---|---|
| wheat flour | 10 kg |
| improver | 2 kg |
| egg | 1 kg |
| yeast | 0.6 kg |

(continued)

| Component | Amount |
|-----------|--------|
| fat | 1.0 kg |
| water | 4 kg |

The yeast raised sweet doughs were baked from above composition. The doughs showed comparable dough stability and extensibility.

5. Composition of confectionery mix for sweet doughs

A blend was made by mixing the following ingredients in the amounts indicated:

| Ingredient | Comparative | Acc. to invention |
|------------|-------------|-------------------|
| | (wt%) | (wt%) |
| wheat flour | 55.9 | 55.9 |
| sugar | 20.8 | 20.8 |
| pregelat. wheat flour | 8.8 | 8.8 |
| wheat gluten | 5.1 | 5.1 |
| butter milk powder | 2.5 | 2.5 |
| sodium bicarbonate | 1.5 | 1.5 |
| lecithin | 1.5 | 1.5 |
| glucose-$\delta$-lactone | 1.5 | 1.5 |
| DATEM | 0.6 | 0.6 |
| monoglycerides | 0.5 | 0.5 |
| acidic sodium pyrophosphate | 0.5 | 0.5 |
| salt | 0.2 | 0.2 |
| tricalcium phosphate | 0.14 | 0.14 |
| flavours | 0.07 | 0.07 |
| ascorbic acid | 0.02 | 0.02 |
| L-cysteine HCL | 0.001 | - |
| rye fraction | - | 0.04 |
| | 100 % | 100 % |

6. Above compositions were applied for the preparation of a dough for chemically leavened dough for typical German "Blechkuchen" according to the following recipe:

| Component | Amount |
|-----------|--------|
| confectionery mix of example 5 | 10.0 kg |
| water | 5.0 kg |
| egg | 3.0 kg |
| fat | 1.5 kg |

The doughs showed excellent stability and extensibility.

**Claims**

1. Improver composition comprising:

5 - 50 wt%, preferably 10-40 wt%, most preferably 15-35 wt% of a sugar, preferably selected from sucrose, glucose or mixtures thereof.

1 - 20 wt%, preferably 3-15 wt%, most preferably 5-13 wt% of an emulsifier system which can contain diacetyl tartaric esters from monoglycerides.

| | |
|---|---|
| 1 - 12 wt%, | preferably 2.5-10 wt%, most preferably 7-9 wt% of dough stabilizers |
| 0.05- 2.5 wt%, | preferably 0.1-1.5, most preferably 0.5-1 wt% of enzyme preparations |
| 0.1 - 1.0 wt%, | preferably 0.2-0.5 wt%, of chemical oxidative agent(s), in particular ascorbic acid. |
| 0.1 - 10 wt%, | preferably 0.5-8 wt%, most preferably 0.5-5 wt% of a rye fraction having: |

- a protein content of more than 12 wt%;
- an increased dietary fibre content of at least 10 % compared with ordinary rye flour;
- a particle size distribution, such that at least 95 wt% has a particle size below 64 $\mu$m.

| | |
|---|---|
| 0 - 50 wt%, | preferably 2-40 wt%, most preferably 15-25 wt% of soya bean flour. |
| 0 - 40 wt%, | preferably 15-35 wt%, most preferably 15-25 wt% of a cold-gelling thickening agent. |
| 0 - 50 wt%, | preferably 5-40 wt%, most preferably 10-25 wt% of a malt product. |
| 0 - 10 wt%, | preferably 0.5-8 wt%, most preferably 2-5 wt% of a fat, preferably hardened vegetable fat. |
| 0 - 20 wt%, | preferably 2-18 wt%, most preferably 5-15 wt% of a flour, preferably a wheat flour. |

2. Improver composition according to claim 1, wherein the cold gelling thickening agent is selected from the group, consisting of guar gum, carboxy methyl cellulose, locust bean gum, gelatin and galactomannane.

3. Improver composition according to claim 1, wherein the additional emulsifier(s) is selected from the group consisting of lecithin, monoglycerides (saturated, unsaturated or a mixture) and sodium or calcium stearoyl lactylate.

4. Improver composition according to claim 1, wherein the dough stabilizers are selected from the group consisting of: acidic phosphates, acidic pyrophosphates and calcium phosphates, in particular derived from calcium.

5. Improver composition according to claim 1, wherein the enzyme preparations are selected from the group, consisting of xylanase, amylase, oxidase, peroxidase, lipase, cellulase, hemicellulase, lipoxygenase and galactomannane.

6. Mix for preparation of a dough for rolls and breads comprising flour and/or other cereal products and/or proteins like gluten and/or dried sour doughs having the composition of calculated on flour:

| | |
|---|---|
| 1 - 10 wt%, | preferably 2-8 wt%, most preferably 3-6 wt% of the improver composition according to claims 1-5. |
| 0.1 - 30 wt%, | of a leavening component, selected from the group consisting of yeast, chemical leaveners, sour doughs and pre-doughs. |
| 20 - 70 wt%, | preferably 30-65 wt%, most preferably 40-60 wt% of water. |

7. Mix for the preparation of confectionery products based on sweet yeast doughs, comprising:

| | |
|---|---|
| 20 - 80 wt%, | preferably 40-70 wt%, in particular 50-65 wt% of a sugar. |
| 10 - 60 wt%, | preferably 10-40 wt%, in particular 10-20 wt% of a flour. |
| 5 - 80 wt%, | preferably 10-70 wt%, in particular 10-40 wt% of the improver composition, according to claims 1-5. |
| 0 - 10 wt%, | of proteins like gluten. |

8. Sweet confectionery dough, comprising:

| | |
|---|---|
| 15 - 70 wt%, | of flour, in particular wheat flour |
| 5 - 60 wt%, | of the mix according to claim 7 |
| 0 - 10 wt%, | of whole egg or egg-yolk |
| 0.5-10 wt%, | of yeast, a chemical leavener or a wheat pre-dough |
| 1 - 40 wt%, | of a bakery fat, |
| balance water, | preferably being 20-35 wt%. |

9. Baked goods made from premoulded parts of the dough made from the mixes, containing the improver compositions according to claim 1-5.

6

**10.** Use of a rye fraction, having a protein content of more than 12 wt%, an increased fibre content of at least 10 %, compared with ordinary rye flour and a particle size distribution such that at least 95 wt% has a particle size below 64 µm as a cysteine substitute for the improvement of dough extensibility.

**Patentansprüche**

**1.** Verbesserer-Zusammensetzung, umfassend:

| | |
|---|---|
| 5-50 Gew.-%, | vorzugsweise 10-40 Gew.-%, insbesondere 15-35 Gew.-%, eines Zuckers, vorzugsweise ausgewählt aus Saccharose, Glucose oder Mischungen davon; |
| 1-20 Gew.-%, | vorzugsweise 3-15 Gew.-%, insbesondere 5-13 Gew.-%, eines Emulgatorsystems, das Diacetylweinsäureester von Monoglyceriden enthalten kann; |
| 1-12 Gew.-%, | vorzugsweise 2,5-10 Gew.-%, insbesondere 7-9 Gew.-%, Teigstabilisatoren; |
| 0,05-2,5 Gew.-%, | vorzugsweise 0,1-1,5 Gew.-%, insbesondere 0,5-1 Gew.-%, Enzympräparationen; |
| 0,1-1,0 Gew.-%, | vorzugsweise 0,2-0,5 Gew.-%, eines oder mehrerer chemischer Oxidationsmittel, insbesondere Ascorbinsäure; |
| 0,1-10 Gew.-%, | vorzugsweise 0,5-8 Gew.-%, insbesondere 0,5-5 Gew.-%, einer Roggenfraktion, die aufweist: |

- einen Proteingehalt von mehr als 12 Gew.-%;
- einen erhöhten Gehalt an Ballaststofffasern von mindestens 10 Gew.-%, verglichen mit üblichem Roggenmehl;
- eine solche Teilchengrößenverteilung, daß mindestens 95 Gew.-% eine Teilchengröße unter 64 µm aufweisen

| | |
|---|---|
| 0-50 Gew.-%, | bevorzugt 2-40 Gew.-%, insbesondere 15-25 Gew.-%, Sojamehl; |
| 0-40 Gew.-%, | bevorzugt 15-35 Gew.-%, insbesondere 15-25 Gew.-%, eines kaltgelierenden Verdickungsmittels; |
| 0-50 Gew.-%, | bevorzugt 5-40 Gew.-%, insbesondere 10-25 Gew.-%, eines Malzproduktes; |
| 0-10 Gew.-%, | bevorzugt 0,5-8 Gew.-%, insbesondere 2-5 Gew.-%, eines Fetts, bevorzugt gehärtetes Pflanzenfett; |
| 0-20 Gew.-%, | bevorzugt 2-18 Gew.-%, insbesondere 5-15 Gew.-%, eines Mehls, vorzugsweise eines Weizenmehls. |

**2.** Verbesserer-Zusammensetzung nach Anspruch 1, worin das kaltgelierende Verdickungsmittel aus der Gruppe ausgewählt ist, die aus Guargummi, Carboxymethylcellulose, Johannisbrotgummi, Gelatine und Galactomannan besteht.

**3.** Verbesserer-Zusammensetzung nach Anspruch 1, worin der oder die zusätzlichen Emulgatoren aus der Gruppe ausgewählt sind, die aus Lecithin, Monoglyceriden (gesättigt, ungesättigt oder eine Mischung) und Natrium- oder Calciumstearoyllactylat besteht.

**4.** Verbesserer-Zusammensetzung nach Anspruch 1, worin die Teigstabilisatoren aus der Gruppe ausgewählt sind, die aus sauren Phosphaten, sauren Pyrophosphaten und Calciumphosphaten, insbesondere von Calcium abgeleitet, besteht.

**5.** Verbesserer-Zusammensetzung nach Anspruch 1, worin die Enzympräparationen aus der Gruppe ausgewählt sind, die aus Xylanase, Amylase, Oxidase, Peroxidase, Lipase, Cellulase, Hemicellulase, Lipoxygenase und Galactomannan besteht.

**6.** Mischung zur Herstellung eines Teiges für Brötchen und Brot, umfassend Mehl und/oder andere Getreideprodukte und/oder Proteine, wie Gluten, und/oder getrocknete Sauerteige, mit der auf Mehl berechneten Zusammensetzung:

| | |
|---|---|
| 1-10 Gew.-%, | vorzugsweise 2-8 Gew.-%, insbesondere 3-6 Gew.-%, der Verbesserer-Zusammensetzung gemäß den Ansprüchen 1 bis 5; |
| 0,1-30 Gew.-% | einer Treibkomponente, ausgewählt aus der aus Hefe, chemischen Treibmitteln, Sauerteig und |

Vorteig bestehenden Gruppe;

20-70 Gew.-%, vorzugsweise 30-65 Gew.-%, insbesondere 40-60 Gew.-%, Wasser.

**7.** Mischung zur Herstellung von Konditorbackwarenprodukten auf der Basis süßer Hefeteige, umfassend:

20-80 Gew.-%, vorzugsweise 40-70 Gew.-%, insbesondere 50-65 Gew.-%, eines Zuckers;
10-60 Gew.-%, vorzugsweise 10-40 Gew.-%, insbesondere 10-20 Gew.-%, eines Mehls;
5-80 Gew.-%, vorzugsweise 10-70 Gew.-%, insbesondere 10-40 Gew.-%, der Verbesserer-Zusammensetzung gemäß den Ansprüchen 1 bis 5;
0-10 Gew.-% Proteine, wie Gluten.

**8.** Süßer Konditorbackwarenteig, umfassend:

15-70 Gew.-% Mehl, insbesondere Weizenmehl;
5-60 Gew.-% der Mischung gemäß Anspruch 7;
0-10 Gew.-% Vollei oder Eigelb;
0,5-10 Gew.-% Hefe, eines chemischen Treibmittels oder eines Weizen-Vorteigs;
1-40 Gew.-% eines Backfettes;

wobei der Rest, vorzugsweise 20-35 Gew.-%, Wasser ist.

**9.** Backwaren, hergestellt aus vorgeformten Teilen des Teiges, der aus Mischungen hergestellt ist, die die Verbesserer-Zusammensetzungen gemäß den Ansprüchen 1 bis 5, enthalten.

**10.** Verwendung einer Roggenfraktion mit einem Proteingehalt von mehr als 12 Gew.-%, einem erhöhten Fasergehalt von mindestens 10%, verglichen mit üblichem Roggenmehl, und einer solchen Teilchengrößenverteilung, daß mindestens 95 Gew.-% eine Teilchengröße unter 64 μm aufweisen, als Cystein-Ersatz für die Verbesserung der Teigausdehnungsfähigkeit.

**Revendications**

**1.** Composition d'agent d'amélioration comprenant :

5 à 50% en poids, de préférence 10 à 40% en poids, surtout 15 à 35% en poids d'un sucre, de préférence choisi parmi le saccharose, le glucose ou leurs mélanges. 1 à 20% en poids, de préférence 3 à 15% en poids, surtout 5 à 13% en poids d'un système émulsifiant, qui peut contenir des esters diacétyl-tartriques issus de monoglycérides,
1 à 12% en poids, de préférence 2,5 à 10% en poids, surtout 7 à 9% en poids de stabilisants de la pâte,
0,05 à 2,5% en poids, de préférence 0,1 à 1,5% en poids, surtout 0,5 à 1% en poids de préparations enzymatiques, 0,1 à 1,0% en poids, de préférence 0,2 à 0,5% en poids d'agent(s) oxydant(s) chimique(s), en particulier l'acide ascorbique,
0,1 à 10% en poids, de préférence 0,5 à 8% en poids, surtout 0,5 à 5% en poids d'une fraction de seigle,

ayant :

- une teneur en protéine de plus de 12% en poids,
- une teneur en fibres alimentaires accrue d'au moins 10% en comparaison avec la farine de seigle ordinaire ;
- une distribution granulométrique telle qu'au moins 95% en poids ont une granulométrie en dessous de 64 μm ;
- 0 à 50% en poids, de préférence 2 à 40% en poids, surtout 15 à 25% en poids de farine de soja,

0 à 40% en poids, de préférence 15 à 35% en poids, surtout 15 à 25% en poids d'un agent épaississant gélifiant à froid,
0 à 50% en poids, de préférence 5 à 40% en poids, surtout 10 à 25% en poids d'un produit malté,
0 à 10% en poids, de préférence 0,5 à 8% en poids, surtout 2 à 5% en poids d'une graisse, de préférence une graisse végétale durcie,
0 à 20% en poids, de préférence 2 à 18% en poids, surtout 5 à 15% en poids d'une farine, de préférence une farine de froment.

**2.** Composition d'agent d'amélioration selon la revendication 1, dans laquelle l'agent épaississant gélifiant à froid est choisi parmi la gomme de guar, la carboxyméthylcellulose, la gomme de caroube, la gélatine et le galactomannane.

**3.** Composition d'agent d'amélioration selon la revendication 1, dans laquelle l'émulsifiant supplémentaire est choisi parmi la lécithine, les monoglycérides (saturés, insaturés ou en mélange) et un lactylate stéaroylique de sodium ou de calcium.

**4.** Composition d'agent d'amélioration selon la revendication 1, dans laquelle les stabilisants de la pâte sont choisis parmi les phosphates acides, les pyrophosphates acides et les phosphates de calcium, en particulier dérivés du calcium.

**5.** Composition d'agent d'amélioration selon la revendication 1, dans laquelle les préparations enzymatiques sont choisies parmi les xylanase, amylase, oxydase, peroxydase, lipase, cellulase, hémicellulase, lipoxygénase et galactomannane.

**6.** Mélange pour la préparation d'une pâte pour des petits pains et des pains comprenant de la farine et/ou d'autres produits de céréales et/ou des protéines analogues au gluten et/ou des pâtes acides sèches ayant la composition suivante, calculée sur la farine : 1 à 10% en poids, de préférence 2 à 8% en poids, surtout 3 à 6% en poids de la composition d'agent d'amélioration, selon les revendications 1 à 5, 0,1 à 30% en poids de levain choisi parmi la levure, les levains chimiques, les pâte acides et les pré-pâtes, 20 à 70% en poids, de préférence 30 à 65% en poids, surtout 40 à 60% en poids d'eau.

**7.** Mélange de préparation de produits de confiserie à base de pâtes à levure sucrée comprenant :

20 à 80% en poids, de préférence 40 à 70% en poids, en particulier 50 à 65% en poids d'un sucre,
10 à 60% en poids, de préférence 10 à 40% en poids, en particulier 10 à 20% en poids d'une farine,
5 à 80% en poids, de préférence 10 à 70% en poids, en particulier 10 à 40% en poids de la composition d'agent d'amélioration, selon les revendications 1 à 5,
0 à 10% en poids de protéines comme le gluten.

**8.** Pâte de confiserie/friandise, comprenant :

15 à 70% en poids de farine, en particulier la farine de froment,
5 à 60% en poids du mélange selon la revendication 7,
0 à 10% en poids d'oeuf entier ou de jaune d'oeuf,
0,5 à 10% en poids de levure, de levain chimique ou d'une pré-pâte de froment,
1 à 40% en poids d'une graisse boulangère,

le complément étant de l'eau, de préférence 20 à 35% en poids.

**9.** Produits cuits obtenus à partir de parties prémoulées de la pâte obtenue à partir des mélanges contenant les compositions d'agent d'amélioration selon les revendications 1 à 5.

**10.** Utilisation d'une fraction de seigle ayant une teneur en protéine de plus de 12%, une teneur en fibres accrue d'au moins 10%, comparé à la farine de seigle ordinaire et une distribution granulométrique telle qu'au moins 95% en poids ont une granulométrie en dessous de 64 μm comme substitut de cystéine pour l'amélioration de l'extensibilité de la pâte.